Europäisches Patentamt

European Patent Office

Office européen des brevets

(19)

(11) Veröffentlichungsnummer: **0 320 610 B1**

(12) **EUROPÄISCHE PATENTSCHRIFT**

(45) Veröffentlichungstag der Patentschrift:
21.11.91 Patentblatt 91/47

(51) Int. Cl.$^5$: **F16B 21/04**

(21) Anmeldenummer: **88118281.0**

(22) Anmeldetag: **03.11.88**

(54) Verschluss-Bolzen für die Flansche eines teilbaren Luftfiltergehäuses.

(30) Priorität: **12.12.87 DE 3742194**

(43) Veröffentlichungstag der Anmeldung:
**21.06.89 Patentblatt 89/25**

(45) Bekanntmachung des Hinweises auf die
Patenterteilung:
**21.11.91 Patentblatt 91/47**

(84) Benannte Vertragsstaaten:
**DE ES FR IT**

(56) Entgegenhaltungen:
**DE-A- 1 900 078**
**DE-A- 2 539 905**
**DE-B- 1 229 788**
**US-A- 2 745 162**
**US-A- 4 040 151**

(73) Patentinhaber: **KNECHT Filterwerke GmbH**
**Haldenstrasse 48**
**W-7000 Stuttgart 50 (DE)**

(72) Erfinder: **Baumann, Peter**
**Spitalackerweg 4/A**
**W-7000 Stuttgart 80 (DE)**
Erfinder: **Gebert, Hans**
**Eppinger Strasse 64**
**W-7100 Heilbronn/N (DE)**

(74) Vertreter: **Pfusch, Volker, Dipl.-Ing.**
**MAHLE GMBH Patentabteilung Pragstrasse**
**26-46 Postfach 50 07 69**
**W-7000 Stuttgart 50 (DE)**

## Beschreibung

Die Erfindung betrifft eine Verschlußeinrichtung an den Flanschen eines teilbaren Luftfiltergehäuses nach dem Oberbegriff des Patentanspruchs 1.

Derartige Verschlußeinrichtungen sind bei teilbaren Luftfiltergehäusen an sich bekannt. Bei der bekannten Ausführung ist an dem dem zweiten Flansch abgewandten Ende des Bolzens ein radial überstehender untrennbarer Kopf angeformt. An dem anderen Ende des Bolzens ist die dortige nur Teilbereiche des Umfanges erfassende radiale Erweiterung ein getrenntes mit dem übrigen Bolzen verbindbares Teil. Dieses Teil wird erst nach Montage des Bolzens in den ersten Flansch an dem Bolzen befestigt.

Bei diesem nachträglich anzubringenden Teil handelt es sich um eine Art Riegel, der in eine den Bolzen radial durchlaufende Öffnung klemmend eingeschoben wird.

Nachteilig bei dieser Ausführung ist es, daß die Erstmontage eines derart aufgebauten Bolzens bei automatisierter Filtergehäusekomplettierung umständlich ist. Denn dadurch, daß die erst nach der Montage des Bolzens an dem ersten Flansch anbringbare radiale Erweiterung ein in eine radiale Öffnung des Bolzens einschiebbarer Riegel ist, muß der Bolzen jeweils zu der Montageeinrichtung umfangsmäßig so ausgerichtet sein, daß der Riegel jeweils automatisch radial einschiebbar ist.

Hiervon ausgehend liegt der Erfindung die Aufgabe zugrunde, eine montagefreundlichere Verschlußeinrichtung zu schaffen.

Gelöst wird diese Aufgabe durch eine Ausgestaltung der Verschlußeinrichtung nach den kennzeichnenden Merkmalen des Patentanspruchs 1.

Vorteilhafte Ausbildungen einer solchen Verschlußeinrichtung sind Gegenstand der abhängigen Ansprüche.

Ein Ausführungsbeispiel ist in der Zeichnung dargestellt. Es zeigen

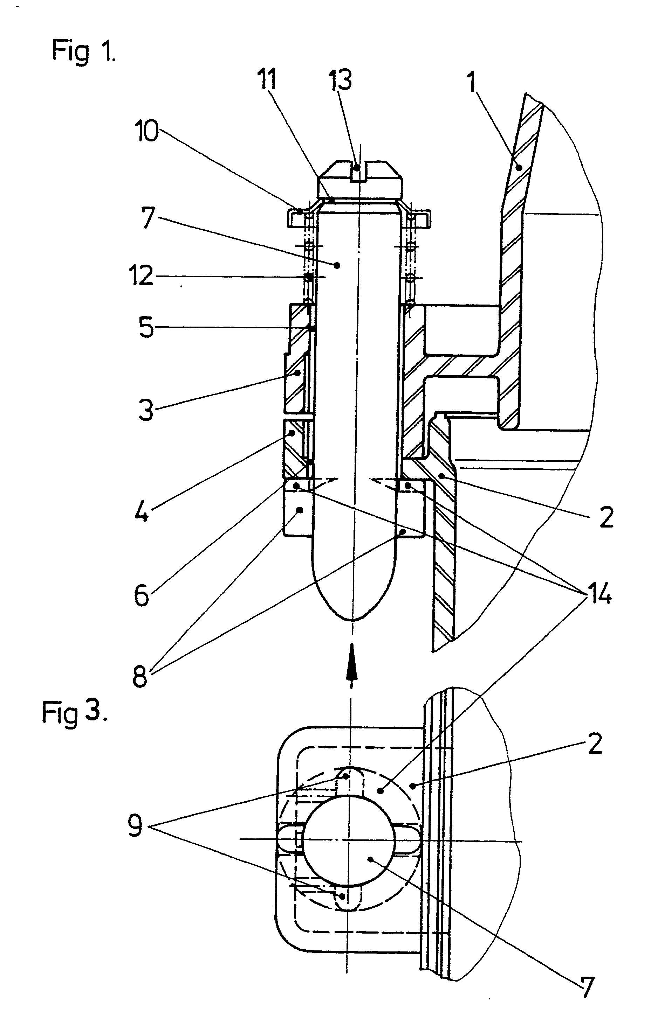

Fig. 1    die Ansicht auf einen Ausschnitt aus einem Filtergehäuse mit einem Ober- und Unterteil des Filtergehäuses verbindenden Bolzen

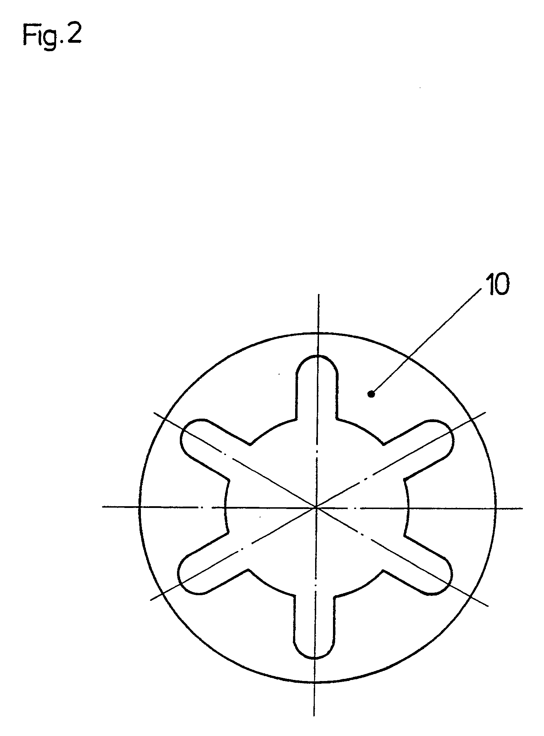

Fig. 2    eine Ansicht auf den Verschlußbolzen nach Pfeil II

Fig. 3    eine Draufsicht auf eine an dem Verschlußbolzen befestigbare Sicherungsscheibe

Das Luftfiltergehäuse besteht aus einem Oberteil 1 und einem Unterteil 2, wobei diese beiden Teile in einer von jeweils einem an jedem der beiden Teile angeformten Flansch gebildeten Trennebene voneinander trennbar sind. In der Zeichnung ist der mit dem Oberteil verbundene erste Flansch mit 3 und der mit dem Unterteil verbundene zweite Flansch mit 4 bezeichnet. Beide Flansche 3, 4 besitzen koaxial zueinander ausgerichtete Durchgangsbohrungen 5 und 6.

An dem Flansch 3 des Filtergehäuse-Oberteiles 1 ist ein Verschlußbolzen 7 gegen Herausfallen fixiert. Der Verschlußbolzen 7 besitzt an seinem dem Flansch 4 des Unterteiles zugewandten Ende 2 radial diametral gegenüberliegende über den Durchmesser des Bolzens 7 hinausragende Rippen 8. Die Durchgangsbohrung 6 in dem unteren Flansch 4 weist radiale Ausnehmungen 9 in einer Größe auf, die ein Hindurchführen des Bolzens 7 mit den Rippen 8 durch die Durchgangsbohrung 6 hindurch ermöglicht.

An dem entgegengesetzten Ende des Bolzens 7 ist eine Sicherungsscheibe 10 in eine Rille 11 des Bolzens 7 eingesprengt. Die Sicherungsscheibe 10 ist axial auf den Bolzen 7 bis zum Einschnappen in die Rille 11 aufgeschoben. Zwischen der Sicherungsscheibe 10 und dem Flansch 3 des Oberteiles ist eine Druckfeder 12 eingeklemmt. An dem Ende des Bolzens 7, an dem die Sicherungsscheibe 10 angebracht ist, befindet sich an der Stirnseite ein Schlitz 13, in den ein Werkzeug zum Verdrehen des Bolzens einführbar ist.

In verschlossenem Zustand der beiden Gehäuseteile 1 und 2 sind die radialen Rippen 8 des Verschlußbolzens 7 in an dem Flansch 4 angeformten radial ausgerichteten Nocken 14 gegen Verdrehen gesichert. Zum Trennen der beiden Gehäuseteile 1 und 2 wird der Verschlußbolzen 7 gegen den Druck der Feder 12 durch die Durchgangsbohrungen 5, 6 hindurchgeschoben bis die Rippen 8 durch die Nocken 14 nicht mehr gegen Verdrehen gesichert sind. In diesem Zustand wird der Bolzen 7 um 90 Grad verdreht, wodurch die Rippen 8 oberhalb der Ausnehmungen 9 zu liegen kommen. In dieser Lage des Bolzens 7 können die beiden Gehäuseteile 1, 2 voneinander getrennt werden.

Die Erstmontage des Filtergehäuses einschließlich des Anbringens der Verschlußbolzen 7 und deren Einstellung in Verschlußstellung geschieht wie folgt.

Die Verschlußbolzen 7 werden in eine nicht dargestellte Montagevorrichtung derart eingesteckt, daß sie geodätisch unten mit den Rippen 8 formschlüssig in der Montagevorrichtung fixiert sind.

Gegenüber dem sodann in die Montagevorrichtung über die Bolzen 7 einzuführenden Filtergehäuse-Unterteil 2 ist der Bolzen 7 mit seinen Rippen 8 so ausgerichtet, daß der Bolzen sich in der die Gehäuseteile 1 und 2 verriegelnden Stellung befindet. Auf das in die Montagevorrichtung eingelegte Unterteil 2 wird sodann wie-

2

derum über die Bolzen 7 das Oberteil 1 aufgestülpt. Nachdem sodann die Federn 12 aufgebracht sind, wird die Sicherungsscheibe 10 axial aufgesteckt, bis sie in der Rille 11 eingeschnappt ist. Damit kann das Filtergehäuse komplettiert und verschlossen der Montagevorrichtung entnommen werden.

## Patentansprüche

1.
a) Verschlußeinrichtung an den Flanschen (3, 4) eines teilbaren Luftfiltergehäuses mit in den Flanschen koaxial übereinanderliegenden einen Verschlußbolzen (7) aufnehmenden Durchgangsbohrungen (5, 6),
b) der Verschlußbolzen (7) besitzt an beiden Enden radiale Erweiterungen, die diametral den Durchmesser der Durchgangsbohrungen (5, 6) in den beiden Flanschen (3, 4) überragen und von denen eine erst nach dem Einschieben des Bolzens (7) durch die Durchgangsbohrung (5) eines ersten (3) der beiden Flansche (3, 4) montiert wird, wodurch der Bolzen (7) gegenüber diesem ersten Flansch (3) gegen Herausfallen gesichert ist,
c) zwischen dem ersten Flansch (3) und dem gegenüber dem zweiten Flansch (4) abgewandten Ende des Bolzens (7) ist eine Druckfeder (12) eingeklemmt,
d) die radiale Erweiterung (8) an dem dem zweiten Flansch (4) zugewandten Ende des Bolzens (7) erstreckt sich nur über einen Teilbereich des Umfangs des Bolzens (7), wobei die Durchgangsbohrung (6) des zweiten Flansches (4) diesen Teilbereichen (8) entsprechende radiale Ausnehmungen (9) aufweist, um das betreffende Ende des Bolzens (7) durch die Durchgangsbohrung (5) des zweiten Flansches (4) bei entsprechender umfangsmäßiger Ausrichtung hindurchschieben zu können,
e) radial um die Durchgangsbohrung (6) des zweiten Flansches (4) sind an dessen von dem ersten Flansch (3) abgewandten Oberfläche radial ausgerichtete Nocken (14) zur verdrehsicheren Aufnahme der radialen Teilbereichserweiterungen (8) des zugehörigen Endes des Bolzens (7) angeordnet,
f) an dem dem zweiten Flansch (4) abgewandten Ende des Bolzens (7) ist dieser, um ihn zum Verbinden und Lösen der Flansche (3, 4) verdrehen zu können, mit entsprechenden Angriffsflächen (13) versehen, dadurch **gekennzeichnet, daß**
g) die von dem zweiten Flansch (4) abgewandte Erweiterung des Endes des Bolzens (7) ein in eine ringförmige Halterung (11) des Bolzens (7) einschnappendes Teil (10) ist und daß der Bolzen (7) an diesem Ende mit einem diametral über seine Stirnseite verlaufenden Schlitz (13) versehen ist.
2. Verschlußeinrichtung nach Anspruch 1, dadurch **gekennzeichnet, daß** das einschnappende Teil eine federnde Sicherungsscheibe (10) ist.
3. Verschlußeinrichtung nach Anspruch 1 oder 2, dadurch **gekennzeichnet, daß** die Sicherungsscheibe (10) axial auf den Bolzen (7) aufschiebbar ist.

## Claims

1.
a) A closure device on the flanges (3, 4) of a divisible air filter housing having coaxially superposed in the flanges through-bores (5, 6) which accommodate a closure bolt (7),
b) the closure bolt (7) has at both ends radially widened out portions which project diametrically beyond the diameter of the through-bores (5, 6) in the two flanges (3, 4) and of which one is fitted only after the bolt (7) has been pushed through the through-bore (5) of a first flange (3) of the two flanges (3, 4), the bolt (7) being safeguarded against falling out vis-a-vis this first flange (3),
c) a thrust spring (12) is clamped between the first flange (3) and that end of the bolt (7) which is remote from the second flange (4),
d) the radial widening (8) at the end of the bolt (7) remote from the second flange (4) extends only over a part of the periphery of the bolt (7), the through-bore (6) of the second flange (4) having, corresponding to these partial zones (8), radial recesses (9) so that the relevant end of the bolt (7) can be pushed through the through-bore (5) of the second flange (4) when its periphery is properly orientated,
e) radially around the through-bore (6) of the second flange (4) there are on its surface remote from the first flange (3) radially directed projections (14) for the non-rotatable housing of the radial widened portions (8) of the associated end of the bolt (7),
f) at the end of the bolt (7) which is remote from the second flange (4), the said bolt (7) is provided with appropriate working surfaces (13) so that it can be rotated in order to connect and separate the flanges (3, 4), characterised in that

3

g) the widened portion of the end of the bolt (7) which is remote from the second flange (4) is a part (10) adapted for snap fitment into an annu... retainer (11) of the bolt (7) and in that the bolt (7) is provided at this end with a slot (13) extending ove... end face.

2. A closure device according to Claim 1, characterised in that the snap-fitting part is a locking spring washer (10).

3. A closure device according to Claim 1 or 2, characterised in that the locking washer (10) can be pushed axially onto the bolt (7).

## Revendications

1.

a) Dispositif de fermeture au niveau des brides (3, 4) d'un corps de filtre à air divisible, présentant des trous traversants (5, 6) superposés coaxialement dans les brides et recevant un boulon de fermeture (7) ;

b) le boulon de fermeture (7) possède à ses deux extrémités des élargissements radiaux qui s'étendent diamétralement au-delà du diamètre des trous traversants (5, 6) dans les deux brides (3, 4) et dont l'un d'entre eux n'est monté que lorsque le boulon (7) a été glissé en place à travers le trou traversant (5) d'une première (3) des deux brides (3, 4), de sorte que le boulon (7) est assujetti de manière imperdable par rapport à cette première bride (3) ;

c) entre la première bride (3) et l'extrémité du boulon (7) éloignée de la seconde bride (4) est serré un ressort de compression (12) ;

d) l'élargissement radial (8) au niveau de l'extrémité du boulon (7) située du côté de la seconde bride (4) ne s'étend que sur une région partielle de la périphérie du boulon (7), le trou traversant (6) de la seconde bride (4) présentant des évidements radiaux (9) correspondant à ces régions partielles (8) afin que l'extrémité concernée du boulon (7) puisse être glissée à travers le trou traversant (5) de la seconde bride (4) pour une orientation périphérique appropriée ;

e) radialement autour du trou traversant (6) de la seconde bride (4) il est disposé, sur la surface de celle-ci détournée de la première bride (3), des saillies (14) orientées radialement et destinées à recevoir les élargissements radiaux (8) de la région partielle de l'extrémité correspondante du boulon (7) de façon à les empêcher de tourner,

f) à l'extrémité du boulon (7) éloignée de la seconde bride (4) ce dernier est muni de surfaces d'attaque appropriées (13) pour pouvoir le tourner afin d'assujettir ou dégager les brides (3, 4), caractérisé en ce que

g) l'élargissement de l'extrémité du boulon (7) éloigné de la seconde bride (4) est une pièce (10) venant en prise brusquement dans un élément de retenue annulaire (11) du boulon (7) et en ce que le boulon (7) présente à cette extrémité une fente (13) s'étendant diamétralement sur son côté frontal.

2. Dispositif de fermeture selon la revendication 1, caractérisé en ce que la pièce venant en prise brusquement est une rondelle d'arrêt (10) à ressort.

3. Dispositif de fermeture selon la revendication 1 ou 2, caractérisé en ce que la rondelle d'arrêt (10) peut être glissée axialement sur le boulon (7).

Fig 1.

Fig 3.

Fig.2

10